# FASCICULE DE BREVET EUROPEEN

(11) **EP 2 782 840 B1**
(45) Date de publication et mention de la délivrance du brevet: **05.07.2017**
(21) Numéro de dépôt: 12790881.2
(22) Date de dépôt: 21.11.2012
(51) Int. Cl.: B65D 33/25

(54) **DISPOSITIF DE FERMETURE POUR SACHETS À EFFET TACTILE ET SONORE ET SACHET COMPRENANT UN TEL DISPOSITIF**
VORRICHTUNG ZUM VERSCHLIESSEN VON BEUTELN MIT BERÜHRUNGS- UND KLANGFUNKTIONEN SOWIE BEUTEL MIT EINER SOLCHEN VORRICHTUNG
DEVICE FOR CLOSING POUCHES WITH TACTILE AND SOUND FEATURES AND POUCH COMPRISING SUCH A DEVICE

(30) Priorité: 21.11.2011 FR 1160605
(43) Date de publication de la demande: 01.10.2014
(73) Titulaire: S2F Flexico, 60119 Henonville (FR)
(72) Inventeur: BOIS, Henri, F-92200 Neuilly-sur-Seine (FR); MOULIN, Isabelle, F-75008 Paris (FR)
(74) Mandataire: Regimbeau
(86) Numéro de dépôt international: PCT/EP2012/073186
(87) Numéro de publication internationale: WO 2013/076120

(56) Documents cités:
- EP-A1- 0 647 415
- EP-A1- 1 747 732
- WO-A1-96/28063
- WO-A1-98/31597
- WO-A1-2008/063308
- FR-A- 1 202 080
- FR-A1- 2 884 119
- JP-A- 2010 120 190
- US-A- 5 070 584
- US-A- 5 138 750
- US-A1- 2003 033 694
- US-A1- 2006 168 776
- US-B1- 6 461 042

## Description

La présente invention concerne le domaine des dispositifs de fermeture pour sachets, sacs ou équivalents.

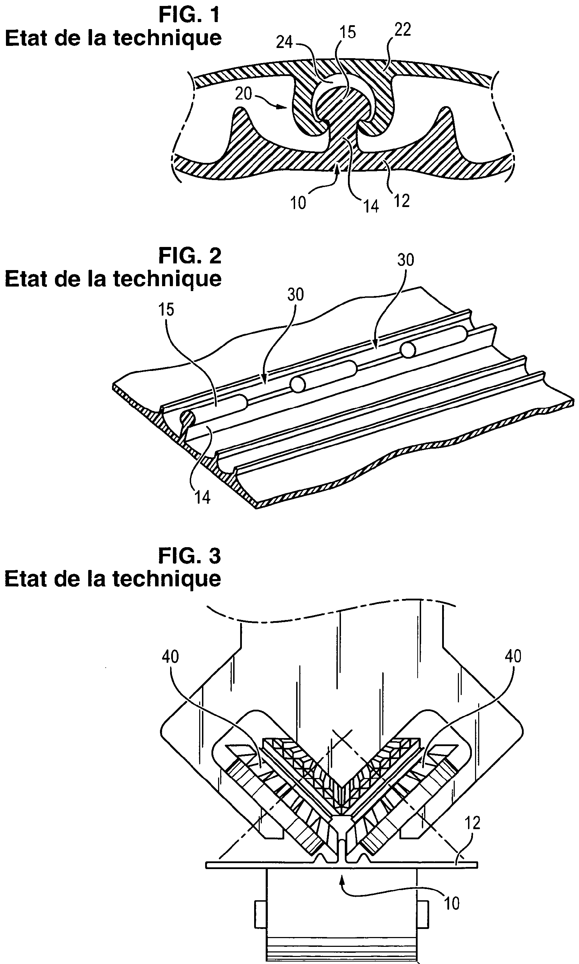

Plus précisément la présente invention concerne les dispositifs de fermeture à base de deux profilés complémentaires 10, 20 portés par des voiles ou parois support opposés respectifs 12, 22 tels qu'illustrés à titre d'exemple non limitatif sur la figure 1 annexée.

De nombreuses variantes de réalisation du dispositif illustré sur la figure 1 ont déjà été proposées et tombent dans le champ de la présente invention.

Généralement, les profilés complémentaires précités sont formés d'éléments mâle/femelle complémentaires, l'élément mâle comprenant une tige 14 solidaire du voile ou de la paroi 12 et munie d'une protubérance élargie 15 à son sommet, tandis que l'élément femelle 20 est formé d'une gorge 24 à bords convergents présentant en section une cavité complémentaire de la protubérance 15.

Le but général de la présente invention est de proposer des perfectionnements aux profilés ainsi connus afin de générer une sensation tactile et un effet sonore lors de la fermeture et de l'ouverture du dispositif précité, c'est-à-dire respectivement lors de l'engagement des profilés 10, 20 et de la séparation de ceux-ci.

Différentes dispositions ont déjà été proposées afin de générer de tels sensations tactiles et effets sonores lors de la fermeture et de l'ouverture du dispositif précité.

Des exemples de telles dispositions connues sont décrits dans les documents WO 96/28063, US 5 070 584, US 2006/0168776, US 2003/0033694 et EP 0 446 760. Ces documents divulguent des moyens tels qu'illustrés sur les figures 2 et 3 annexées. Comme on le voit sur la figure 2, les dispositions connues consistent le plus souvent à opérer une déformation ou découpe séquentielle 30 le long de l'un des deux profilés, par exemple le profilé mâle 10 selon l'illustration de la figure 2, afin de définir ainsi une succession de points durs et de points faibles dans l'engagement respectif des éléments 10, 20.

Comme on l'a représenté sur la figure 3, les moyens connus pour réaliser de tels dispositifs de fermeture conformes à l'art antérieur, procèdent généralement par écrasement ou découpe latérale de l'un des profilés, par exemple le profilé mâle 10, à l'aide de mollettes crantées 40 entraînées à rotation autour d'un axe général transversal aux voiles ou parois support 12 du profilé considéré, c'est-à-dire selon une direction de déformation ou de modification d'épaisseur parallèle aux voiles ou parois support 12.

Dans ce contexte, le but particulier de la présente invention est d'améliorer les dispositions connues de l'art antérieur, afin de renforcer la sensation tactile et l'effet sonore.

Un autre objectif de l'invention est de proposer un dispositif de fermeture qui soit étanche.

Ce but est atteint dans le cadre de la présente invention, grâce à un dispositif de fermeture pour sachets ou équivalents conforme à la revendication 1.

Certains aspects préférés mais non limitatifs du dispositif de fermeture conforme à l'invention sont les suivants :
- le dispositif comprend au moins trois profilés complémentaires formant une fermeture multiple, dont des profilés complémentaires comprenant des écrasements séquentiels en prise selon une direction perpendiculaire aux voiles support de sorte que les écrasements séquentiels réalisent un évasement des deux profilés complémentaires dans le sens de la largeur transversale à la direction d'élongation du dispositif de fermeture, et des profilés complémentaires dépourvus d'altérations séquentielles,
- le dispositif comprend au moins cinq profilés complémentaires, dont au moins trois profilés complémentaires comprenant des écrasements séquentiels et au moins un profilé complémentaire comprenant des incisions séquentielles,
- le dispositif comprend au moins cinq profilés complémentaires, dont au moins trois profilés complémentaires comprenant des altérations séquentielles et au moins un profilé complémentaire dépourvu d'altérations séquentielles,
- les profilés complémentaires comprennent des profilés de type mâle/mâle,
- au moins une partie des profilés complémentaires est réalisée dans un premier matériau, et au moins une autre partie des profilés complémentaires est réalisée dans un deuxième matériau, différent du premier matériau,
- le premier matériau comprend du polypropylène ou du polyéthylène haute densité, et le deuxième matériau comprend du polyéthylène ou du polyéthylène basse densité,
- les profilés complémentaires comprenant des altérations séquentielles sont réalisés dans le premier matériau,
- le dispositif comprend à la fois des profilés complémentaires comprenant des altérations séquentielles et des profilés complémentaires dépourvus d'altérations séquentielles, et dans lequel les profilés complémentaires dépourvus d'altérations séquentielles sont réalisés dans le deuxième matériau,
- les profilés complémentaires réalisés dans le premier matériau et/ou les profilés complémentaires réalisés dans le deuxième matériau sont formés intégralement avec une semelle, fixée sur le voile correspondant,
- la semelle est fixée sur le voile correspondant par l'intermédiaire d'un liant,
- la semelle est noyée dans le voile correspondant de sorte que ladite semelle est fixée sur ledit voile, et
- le pas des écrasements séquentiels est compris entre 4mm et 1cm.

Selon un deuxième aspect, l'invention propose également un sachet comprenant un dispositif comme décrit ci-dessus.

D'autres caractéristiques, buts et avantages de la présente invention apparaîtront à la lecture de la description détaillée qui va suivre, et au regard des dessins annexés donnés à titre d'exemples non limitatifs et sur lesquels :
- les figures 1, 2 et 3 précédemment décrites représentent respectivement une vue en coupe transversale d'un dispositif de fermeture conforme à l'état de la technique susceptible d'être utilisé dans le cadre de la présente invention, une vue en perspective partielle d'un dispositif de fermeture présentant des découpes séquentielles conformes à l'état de la technique et un outil conforme à l'état de la technique comportant deux mollettes d'écrasement latérales d'un profilé de fermeture mobiles selon un axe de rotation globalement transversal aux voiles support dudit profilé,
- la figure 4 représente une vue schématique en perspective partielle d'un dispositif de fermeture avant altération,
- la figure 5 représente le même dispositif de fermeture en perspective partielle après altération séquentielle, dans lequel les altérations séquentielles sont des écrasements,
- les figures 6a et 6b représentent respectivement des vues individuelles d'un premier exemple de réalisation d'un profilé mâle et d'un profilé femelle formant en combinaison un dispositif de fermeture illustré sur la figure 5,
- la figure 7a représente une vue en coupe transversale d'un dispositif de fermeture en cours d'écrasement et d'un exemple d'outil utilisé à cet effet,
- la figure 7b représente une variante d'une vue en coupe transversale d'un dispositif de fermeture en cours d'écrasement et d'une variante d'outil utilisé à cet effet,
- la figure 7c est une vue en coupe selon l'axe Ya-Ya de la figure 7a d'un exemple de réalisation de molette pouvant être utilisée dans les outils représentés schématiquement en figures 7a et 7b,
- les figures 8a et 8b représentent respectivement des vues individuelles d'un deuxième exemple de réalisation d'un profilé mâle et d'un profilé femelle formant en combinaison un dispositif de fermeture, dans lequel les altérations séquentielles sont des incisions sans enlèvement de matière,
- la figure 8c représente une vue en coupe transversale d'un profilé complémentaire d'un dispositif de fermeture en cours d'altération par incision et d'un exemple d'outil utilisé à cet effet,
- la figure 8d est une vue en coupe selon l'axe Yb-Yb de la figure 8c d'un exemple de réalisation de molette pouvant être utilisée dans l'outil représenté schématiquement en figure 8c,
- les figures 9a, 9c, 9h et 9i représentent des vues en perspective d'exemples de réalisation de voiles supports pouvant être utilisés dans un dispositif de fermeture,
- la figure 9b est une vue en coupe transversale d'un exemple de réalisation d'un dispositif de fermeture, préalablement à la mise en prise des profilés complémentaires,
- la figure 9d est une vue de côté d'un exemple de réalisation d'une molette pouvant être utilisée dans l'outil représenté schématiquement en figure 8c,
- la figure 9e est une vue en coupe selon l'axe Yc-Yc de la molette de la figure 9d,
- la figure 9f est une vue de côté d'un exemple de réalisation d'une molette pouvant être utilisée dans les outils représentés schématiquement en figures 7a, 7b et 8c,
- la figure 9g est une vue en coupe selon l'axe Yd-Yd de la molette de la figure 9f,
- la figure 10 représente une vue en perspective d'un sachet conforme à la présente invention comprenant des altérations séquentielles réalisées selon les modalités de l'invention,
- les figures 11, 12 et 13 représentent respectivement, pour une première variante de réalisation d'un dispositif de fermeture conforme à la présente invention comprenant deux paires de profilés de fermeture complémentaires parallèles, une vue en perspective partielle du dispositif de fermeture après écrasement séquentiel d'une paire de profilés et des vues individuelles de profilés mâles et de profilés femelles formant en combinaison un dispositif de fermeture conforme à la présente invention illustré sur la figure 11,
- les figures 14, 15 et 16 représentent respectivement, pour une deuxième variante de réalisation d'un dispositif de fermeture comprenant deux paires de profilés de fermeture complémentaires parallèles, une vue en perspective partielle du dispositif de fermeture après écrasement séquentiel des deux paires de profilés et des vues individuelles de profilés mâles et de profilés femelles formant en combinaison un dispositif de fermeture illustré sur la figure 14,
- les figures 17, 18 et 19 représentent respectivement, pour une troisième variante de réalisation d'un dispositif de fermeture comprenant deux paires de profilés de fermeture complémentaires parallèles, une vue en perspective partielle du dispositif de fermeture après écrasement séquentiel des deux paires de profilés avec décalage longitudinal entre les écrasements réalisés sur les deux paires de profilés et des vues individuelles de profilés mâles et de profilés femelles formant en combinaison un dispositif de fermeture illustré sur la figure 17,
- les figures 20, 21 et 22 représentent respectivement, pour une quatrième variante de réalisation d'un dispositif de fermeture comprenant deux paires de profilés de fermeture complémentaires parallèles l'un de type mâle/femelle complémentaires et l'autre de type crochets complémentaires, une vue en perspective partielle du dispositif de fermeture après écrasement séquentiel et des vues individuelles des profilés portés par des films support opposés et formant en combinaison un dispositif de fermeture illustré sur la figure 20, et
- les figures 23a et 23b représentent schématiquement un profilé complémentaire fixé à l'aide d'un exemple de réalisation de semelle sur un voile support correspondant.

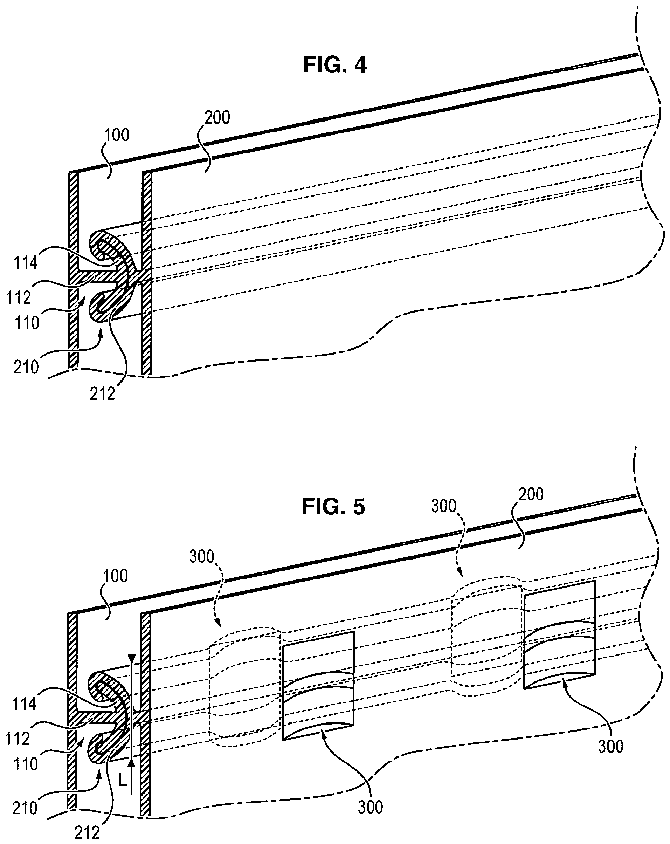

On a représenté sur la figure 4 annexée, un dispositif de fermeture comprenant deux voiles support 100, 200 portant respectivement deux profilés complémentaires 110, 210.

Selon le mode de réalisation particulier représenté sur la figure 4, le premier profilé 110 comprend une tige 112 globalement perpendiculaire au voile support 100 et munie à son sommet opposé au voile support 100, d'une protubérance évasée 114. Le profilé femelle 210 complémentaire quant à lui, comprend essentiellement une gorge à bords convergents 212 définissant dans sa section une cavité complémentaire de la protubérance évasée 114.

Les profilés de fermeture complémentaires 110 et 210 présentent une section constante sur leur longueur. Ils sont de préférence réalisés par extrusion. Un tel dispositif de fermeture ne sera pas décrit plus en détail dans sa structure initiale, dans la mesure où de tels dispositifs de fermeture sont bien connus de l'homme de l'art, et peuvent donner lieu à de nombreux modes de réalisation ou variantes. On citera par exemple une variante de réalisation dans laquelle, le dispositif de fermeture comporte deux profilés complémentaires 110, 210, non pas sous forme d'un élément mâle ou d'un élément femelle complémentaire, mais sous forme de simples crochets complémentaires ou de profilés mâles complémentaires.

Par ailleurs, dans le cadre de la présente invention, on peut envisager, soit un dispositif de fermeture comprenant les deux profilés de fermeture 110, 210 réalisés séparément d'un sachet, puis rapportés et fixés, par exemple par soudure thermique sur des films composant un sachet ou encore un dispositif de fermeture venu directement de matière, par exemple d'extrusion, avec des films formant les parois du sachet.

Comme on l'a indiqué précédemment, les profilés complémentaires 110, 210 sont altérés séquentiellement selon une altération dans une direction perpendiculaire aux voiles et parois support 100, 200. Les altérations séquentielles sont des modifications locales séquentielles des profilés 110, 210, qui peuvent notamment comprendre des écrasements séquentiels et/ou des incisions séquentielles sans enlèvement de matière.

La figure 5 illustre les zones d'altération ainsi obtenues au niveau de zone référencée 300. Les zones d'altération 300 couvrent tout ou partie de la largeur L des profilés considérés perpendiculairement à leur direction d'élongation.

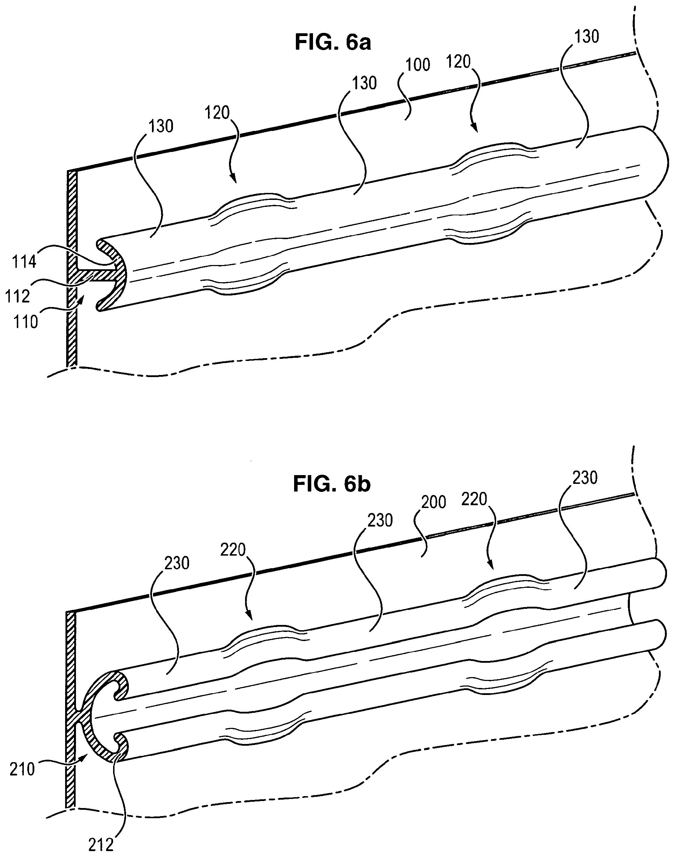

Selon une première forme de réalisation, on a illustré sur les figures 6a et 6b respectivement un profilé mâle 110 et un profilé femelle 210 altérés séquentiellement par écrasement. On observe sur les figures 6a et 6b des évasements séquentiels 120, 220 selon la largeur transversale à la direction d'élongation, tant du profilé mâle 110 que du profilé femelle 210. Cependant, l'écrasement séquentiel étant réalisé en position assemblée des deux profilés 110, 210, on garantit que les sections transversales, tant du profilé mâle 110 que du profilé femelle 210, bien que déformés en élargissement, restent parfaitement appairés, complémentaires dans une certaine mesure, et compatibles à la fois pour une fermeture, c'est-à-dire une mise en prise, et une ouverture, c'est-à-dire une séparation.

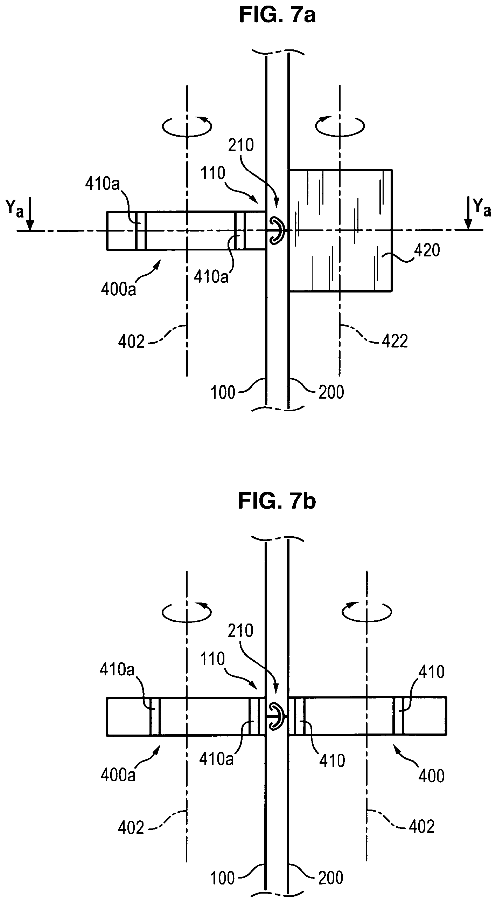

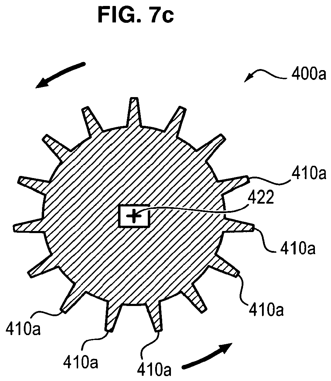

Comme on l'a représenté sur les figure 7a et 7c, les écrasements séquentiels peuvent être réalisés à l'aide d'une mollette 400a crantée avec des protubérances périphériques 410a au pas souhaité des écrasements séquentiels 300, sollicitant un côté du dispositif de fermeture et un simple rouleau d'appui 420 situé sur le côté opposé.

La mollette 400a et le rouleau d'appui 420 illustrés sur les figures, sont entraînés à rotation selon des axes 402, 422 parallèles entre eux et parallèles aux à la direction principale des profilés complémentaires 110, 210.

On a illustré sur la figure 7b annexée, une variante de réalisation selon laquelle, l'écrasement séquentiel est réalisé à l'aide de deux rouleaux ou molettes crantés 400a disposés respectivement de part et d'autre du dispositif de fermeture, les rouleaux crantés 400a comprenant des protubérances 410a au pas des écrasements 300 souhaités et étant, là encore, entraînés à rotation autour d'axes 402 parallèles entre eux et parallèles à la direction principale des profilés complémentaires 110, 210. Les deux molettes 400a sont synchronisées de sorte que leurs protubérances respectives sollicitent simultanément les profilés 110, 210 en écrasement.

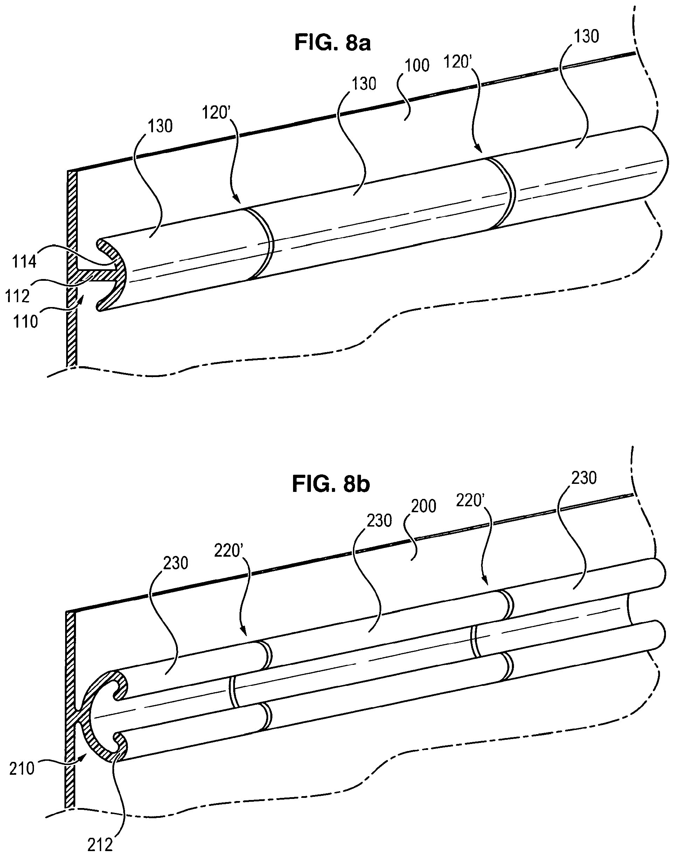

Selon une première forme de réalisation, on a illustré sur les figures 8a et 8b, respectivement un profilé mâle 110 et un profilé femelle 210 altérés séquentiellement par incision sans enlèvement de matière. On observe en effet sur les figures des incisions séquentielles 120', 220' selon la largeur transversale à la direction d'élongation, tant du profilé mâle 110 que du profilé femelle 210. On remarquera que les incisions 120', 220' des profilés 110 et des profilés 210 sont de préférence agencées en regard lorsque les profilés sont assemblés de manière à former le dispositif de fermeture. Ceci n'est cependant pas limitatif, dans la mesure où les incisions 120', 220' pourraient être décalées les unes par rapport aux autres sur les profilés 110 et 210 sans que cela n'ait d'impact sur les effets sonores et tactiles du dispositif de fermeture.

Les incisions séquentielles 120', 220' sont réalisées de préférence en position séparée des deux profilés 110, 210. Il a en effet été remarqué que, dans le cas où les altérations comprennent des incisions, il n'est pas nécessaire que les incisions 120', 220' des profilés 110, 120 se trouvent en regard pour que les profilés restent parfaitement appairés et complémentaires, de sorte qu'ils restent compatibles à la fois pour une fermeture et une ouverture. De plus, les incisions séquentielles 120', 220' sont de préférence réalisées de manière à ne pas couper le voile support 100, 200 qui porte les profilés complémentaires 110, 210. Il est donc préférable de réaliser les incisions 120', 220' directement sur les profilés 110, 210 plutôt qu'indirectement en appliquant une contrainte sur les voiles 100, 200.

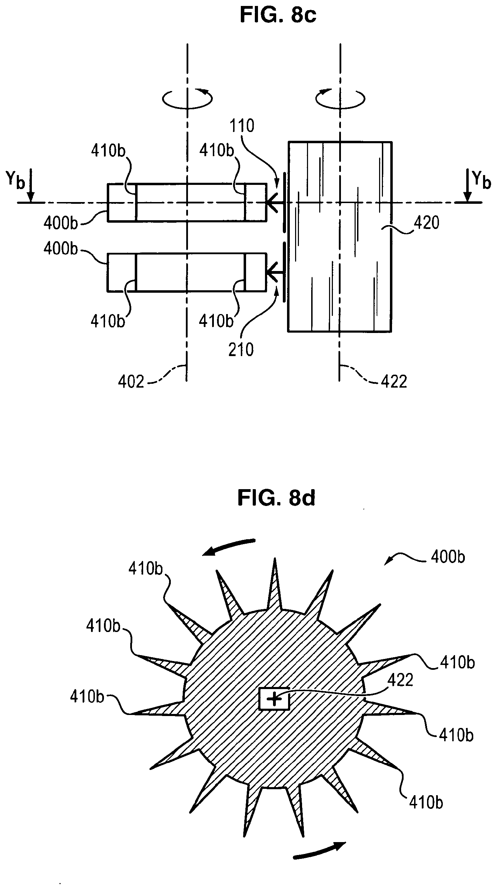

Comme on l'a représenté sur les figures 8c et 8d, les incisions séquentielles 120', 220' peuvent être réalisées à l'aide d'un outil comprenant une mollette 400b crantée avec des protubérances périphériques 410b au pas souhaité des incisions séquentielles 120', 220', coupant ainsi selon leur largeur les profilés 110, 210 du dispositif de fermeture, et un simple rouleau d'appui 420 situé sur le côté opposé.

La mollette 400b et le rouleau d'appui 420, sont entraînés à rotation selon les axes 402, 422. Par ailleurs, les incisions séquentielles 120', 220' des deux profilés complémentaires 110, 210 peuvent être réalisées soit simultanément sur le même rouleau d'appui 420 (ou éventuellement sur deux rouleaux d'appui distincts), à l'aide de deux molettes 400b, comme illustré sur la figure 8c, soit successivement à l'aide deux ensembles de molettes 400b et de rouleau d'appui 420 correspondants.

Selon une forme de réalisation, les voiles support 100, 200 du dispositif de fermeture peuvent porter chacun au moins deux profilés complémentaires 110a-110e, 210a-210e formant une fermeture multiple. Les altérations séquentielles 300 peuvent alors comprendre des écrasement séquentiels 120, 220 et/ou des incisions séquentielles 120', 220' (c'est-à-dire soit uniquement des écrasements séquentiels 120, 220, soit uniquement des incisions séquentielles 120', 220', soit à la fois des écrasements séquentiels 120, 220 et des incisions séquentielles 120', 220').

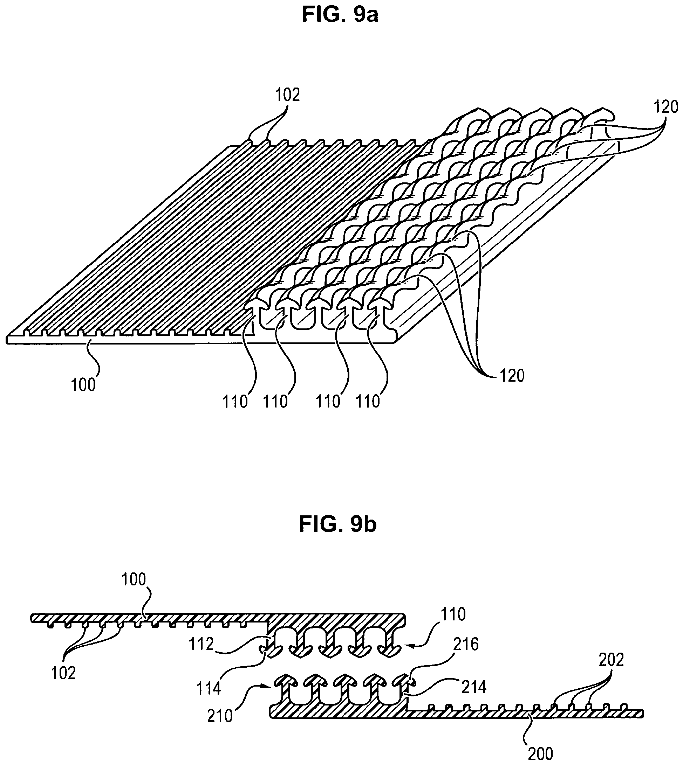

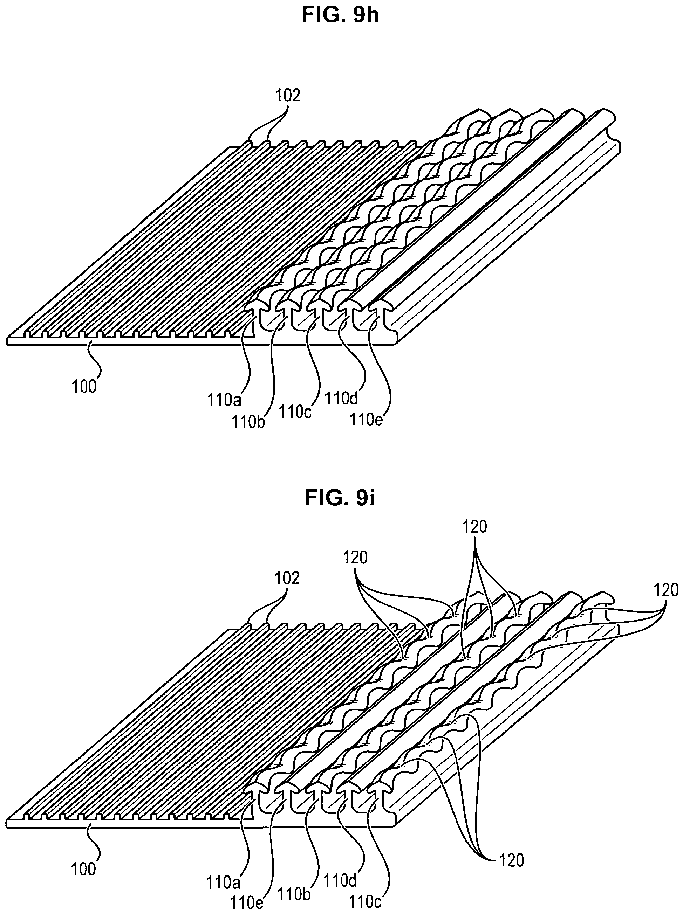

On a par exemple illustré sur les figures 9a à 9c, 9h et 9i des voiles 100, 200 comprenant chacun cinq profilés complémentaires 110a-110e, 210a-210e. Les profilés 110a-110e, 210a-210e sont tous des profilés mâles/mâles comprenant chacun une tige 112, 214 globalement perpendiculaire au voile support 100, 200 et munie d'une protubérance évasée 114, 216 à son sommet opposé au voile support 100, 200 en forme de tête de flèche. Ceci n'est cependant pas limitatif, dans la mesure où les voiles peuvent comprendre un nombre différent de profilés complémentaires 110, 120, en particulier trois, quatre, ou six, qui peuvent être du type mâle/mâle, mâle/femelle, crochets, ou toute autre forme conventionnelle dans le domaine des profilés de fermeture.

Les profilés complémentaires 110a-110e, 210a-210e de la figure 9a comprennent uniquement des écrasements séquentiels. Dans cet exemple de réalisation, la largeur de la molette 400a et de ses protubérances périphériques 410a est alors dimensionnée de manière à écraser simultanément l'ensemble des profilés 110, 120 des voiles 100, 200, les voiles étant de préférence en position assemblée afin de garantir leur apairement ultérieur.

On comprendra bien entendu que les profilés complémentaires peuvent, de la même manière, comprendre uniquement des incisions séquentielles 120', 220'. La largeur de la molette et de ses protubérances périphériques est alors dimensionnée de manière à couper simultanément l'ensemble des profilés 110, 120 des voiles 100, 200, les voiles étant de préférence en position séparée afin de faciliter leur découpe. De préférence, la hauteur et la pointe de l'extrémité libre des protubérances périphériques est dimensionnée de manière à couper les profilés complémentaires 110, 120 uniquement, sans altérer le voile support correspondant 100, 200.

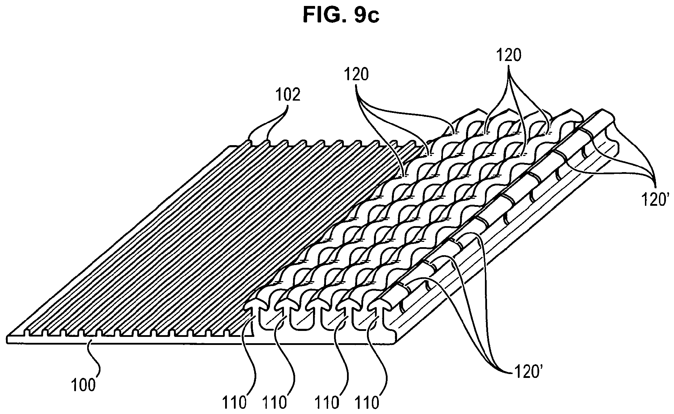

On a illustré sur la figure 9c annexée une variante de réalisation dans laquelle les altérations séquentielles comprennent à la fois des écrasements séquentiels 120, 220 et des incisions séquentielles 120', 220'.

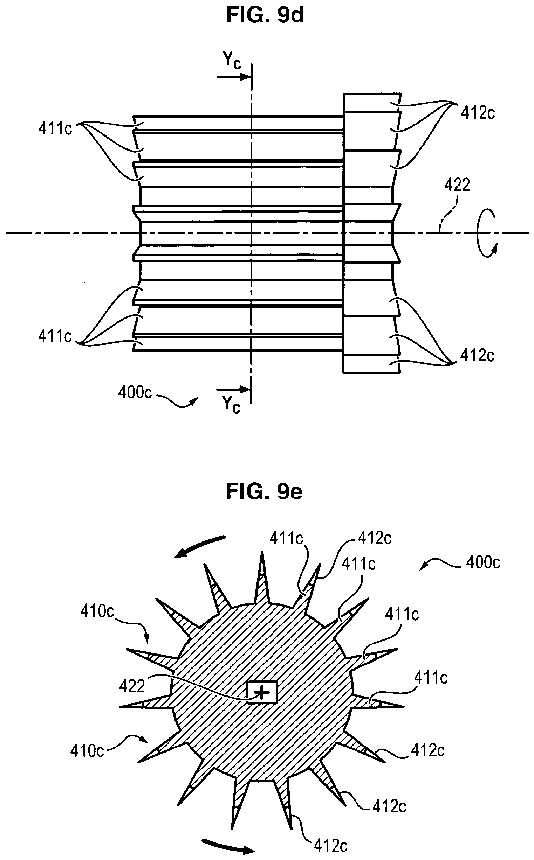

Les altérations séquentielles 300 peuvent alors être réalisées alors que les profilés complémentaires sont séparés, à l'aide d'un outil comprenant une mollette 400c crantée avec des protubérances périphériques 410c au pas souhaité des écrasements séquentiels 120, 220 et des incisions séquentielles 120', 220', et un simple rouleau d'appui 420 situé sur le côté opposé. Comme visible sur les figures 9d et 9e, les protubérances périphériques 410c de la molette 400c présentent pour cela une première partie 411 c, adaptée pour réaliser les écrasements séquentiels 120, 220 en élargissant localement des profilés 110, 210, et une deuxième partie 412c, s'étendant dans le prolongement de la première partie 411 c, adaptée pour couper les profilés 110, 210 selon leur largeur, et former ainsi les incisions 120', 220'.

Afin de garantir que les profilés 110, 210 se trouvent bien en regard des parties 411 c et 412c correspondantes de la molette 400c, l'outil peut en outre comprendre des moyens de guidage des profilés 110, 210, adaptés pour guider les profilés 110, 210 entre le rouleau d'appui 420 et la ou les molettes crantées 400c. Par exemple, les moyens de guidage des profilés 110, 210 peuvent comprendre un guide disposé en amont (dans le sens de défilement des profilés 110, 210) du rouleau 420 et des molettes 400c (un guide par voile support 100, 200 à guider), comprenant un bras présentant, au niveau d'une extrémité libre, un logement en forme de U. Le logement est configuré pour recevoir et positionner les profilés 110, 210 du voile 100, 200 par rapport au rouleau d'appui 420 et aux molettes 400c. Pour cela, les parois latérales du logement peuvent par exemple être séparées d'une distance correspondant sensiblement à la distance entre les deux profilés 110, 210 extrêmes des voiles 100, 200. En variante, le guide peut comprendre deux bras, s'étendant de part et d'autre des profilés 110, 210 du voile 100, 200 correspondant de manière à appliquer une contrainte latérales sur les deux profilés 110, 210 extrêmes du voile 100, 200 de manière à les guider vers les molettes 400c et le rouleau d'appui 420.

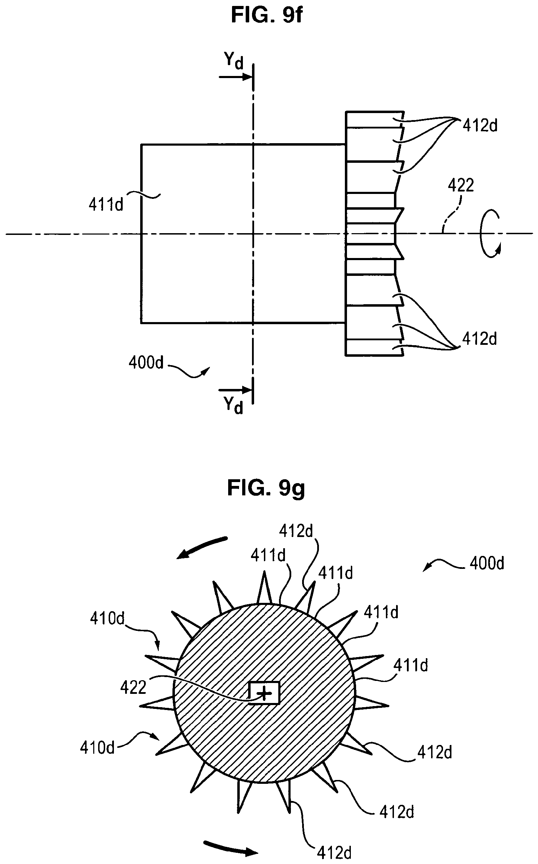

On a illustré sur les figures 9f et 9g une autre forme de réalisation, permettant à la fois d'obtenir l'effet sonore et tactile recherché et de garantir l'étanchéité du dispositif de fermeture.

Pour cela, le dispositif de fermeture comprend au moins deux profilés complémentaires 110a-110e, 210a-210e, de préférence au moins trois, par exemple cinq profilés complémentaires 110a-110e, 210a-210e, comme illustré sur les figures 9h et 9i.

Dans les exemples de réalisation illustrés, les profilés complémentaires 110a-110e, 210a-210e sont portés par des voiles 100, 200 venus de matière, situés respectivement de part et d'autre des profilés 110a-110e, 210a-210e, et présentant chacun de préférence une largeur plus importante que les profilés complémentaires 110a-110e, 210a-210e. Par ailleurs, l'épaisseur des voiles 100, 200 en regard des profilés 110a-110e, 210a-210e est supérieure à l'épaisseur du voile sur l'extérieur des profilés 110a-110e, 210a-210e, par exemple deux fois plus grande. Enfin, les voiles 100, 200 peuvent être munis de rainures 102, 202 sur leur surface afin de faciliter la manipulation du dispositif de fermeture.

Les profilés complémentaires 110a-110e, 210a-210e sont de préférence du type mâle/mâle, et comprennent chacun une tige 112, 214 globalement perpendiculaire au voile support 100, 200 et munie à son sommet opposé au voile support 100, 200, d'une protubérance évasée 114, 216 en forme de tête de flèche. Les protubérances évasée 114, 216 forment en effet des contredépouilles permettant de renforcer l'accrochage mutuel des profilés 110, 210.

Dans le cadre de cette forme de réalisation, une partie des profilés complémentaires 110a-110e, 210a-210e est altérée séquentiellement dans une direction perpendiculaire aux voiles support 100, 200, l'autre partie des profilés complémentaires 110a-110e, 210a-210e restant intacte, c'est-à-dire dépourvues d'altérations telles que définies dans l'invention.

Ici encore, les altérations 300 peuvent notamment comprendre des écrasements séquentiels 120, 220 et/ou des incisions séquentielles 120', 220' sans enlèvement de matière.

De la sorte, les profilés complémentaires 110a-110e, 210a-210e comprenant des altérations assurent la sensation tactile et l'effet sonore de cliquetis lors de l'ouverture et de la fermeture du dispositif de fermeture, tandis que les profilés complémentaires dépourvus de ces altérations assurent l'étanchéité du dispositif de fermeture.

Par exemple, comme illustré sur les figure 9h et 9i, chaque voile 100, 200 du dispositif de fermeture peut comprendre trois profilés complémentaires 110a-110c, 210a-210c comprenant des altérations (ici du type écrasement 120, 220), et deux profilés complémentaires 110d-110e, 210d-210e intacts. En variante (non illustrée sur les figures), pour un dispositif de fermeture comprenant cinq profilés complémentaires, chaque voile 100, 200 peut comprendre un, deux ou quatre profilés complémentaires 110a-110c, 210a-210c comprenant des altérations, et quatre, trois ou un profilés complémentaires 110d-110e, 210d-210e intacts respectivement. On comprendra bien entendu que cela s'applique mutatis mutandis dans le cas d'un dispositif de fermeture comprenant un nombre différents de profilés complémentaires 110, 210.

De manière générale, afin de combiner les effets tactiles et sonores avec la propriété d'étanchéité, les voiles 100, 200 doivent comprendre de préférence chacun au moins un profilé complémentaire comprenant des altérations séquentielles 300, et au moins un profilé complémentaire intact.

En utilisation, afin de garantir l'étanchéité de la fermeture d'un sachet muni d'un dispositif de fermeture, les profilés complémentaires intacts (c'est-à-dire dépourvus d'altérations séquentielles 300), peuvent être disposés indifféremment vers le fond ou vers l'embouchure du sachet, l'étanchéité étant garantie par les profilés complémentaires intacts malgré la présence très proche des altérations séquentielles 300 et des éventuelles déformations locales qu'elles peuvent induire sur les voiles support 100, 200.

Par ailleurs, l'agencement relatif des profilés complémentaires 110, 210 intacts par rapport aux profilés complémentaires 110, 210 pourvus d'altérations séquentielles 300 n'a pas d'effet sur la sensation tactile et sonore ni sur la capacité d'étanchéisation du dispositif de fermeture. Ainsi, les profilés pourvus d'altérations séquentielles 300 et les profilés intacts peuvent indifféremment être groupés par type de profilés (figure 9h), ou s'alterner dans le sens de la largeur (figure 9i).

Par exemple, on a représenté sur la figure 9h le cas d'un voile 100 comprenant trois profilés de fermeture profilés complémentaires 110a-110c, comprenant des altérations du type écrasement 120 adjacents, s'étendant parallèlement à deux profilés complémentaires 110d-110e intacts adjacents, et sur la figure 9i, le cas d'un voile 100 comprenant les mêmes profilés complémentaires 110a-110e disposés en alternance.

Dans cette forme de réalisation, les altérations séquentielles 300 peuvent être réalisées alors que les profilés complémentaires 110a-110e, 210a-210e sont séparés, à l'aide de l'outil illustré sur la figure 8c munie cette fois d'une mollette 400d crantée avec des protubérances périphériques 410d adaptées au pas et aux altérations séquentielles 300 souhaitées, et du rouleau d'appui 420 situé sur le côté opposé.

Comme visible sur les figures 9f et 9g, les protubérances périphériques 410d de la molette 400d présentent pour cela une première partie 411d, dimensionnée de manière à ne pas altérer les profilés 110, 210, et une deuxième partie 412d, s'étendant dans le prolongement de la première partie 411d, adaptée pour réaliser les altérations séquentielles 300 désirées (écrasements séquentiels 120, 220 ou incisions séquentielles 120', 220') en altérant localement selon leur largeur les profilés 110, 210.

Pour cela, la deuxième partie 412d des protubérances périphériques 410d présente un diamètre plus important que la première partie 411d desdites protubérances 410d. Par ailleurs, la hauteur et la pointe de la deuxième partie 411d des protubérances périphériques 410d est dimensionnée de manière à écraser ou à couper les profilés complémentaires 110, 120 uniquement, selon le type d'altération 300 désiré, et ce sans altérer le voile support correspondant 100, 200.

Afin de garantir que les profilés 110a-110e, 210a-210e se trouvent bien en regard des parties 411 d et 412d correspondantes de la molette 400d, afin d'altérer uniquement les profilés 110d-110e, 210d-210e, l'outil peut être muni des moyens de guidage des profilés, et notamment du guide, afin recevoir et positionner les profilés 110a-110e, 210a-210e par rapport au rouleau d'appui 420 et aux molettes 400d.

Les dispositifs de fermeture conformes à la présente invention peuvent être réalisés à base de tout matériau approprié, de préférence à base de polyoléfine. Notamment, afin d'accentuer les effets sonores et tactiles importants, les profilés de fermeture 110, 210 peuvent être réalisés dans un matériau plastique relativement rigide, par exemple en polypropylène. De la sorte, la succession de points durs et faibles dans l'engagement et la séparation des profilés provoque un claquement permettant d'obtenir les effets recherchés.

Selon une forme de réalisation, le dispositif de fermeture peut comprendre des profilés complémentaires 110, 210 réalisés dans des matériaux différents. En effet, la mise en prise et la séparation des profilés complémentaires 110, 210 en matériau rigide peut s'avérer difficile, en particulier lorsque les profilés sont tous de type mâle/mâle, l'effort d'arrachement étant en effet très important. Ainsi, lorsque le dispositif de fermeture comprend au moins deux profilés complémentaires 110, 210, l'un des profilés peut être réalisé en matériau rigide, tandis que l'autre des profilés peut être réalisé dans un matériau plus souple.

Par exemple, des matériaux rigides pouvant être utilisés comprennent du polypropylène ou du polyéthylène haute densité, tandis que des matériaux souples pouvant être utilisés comprennent du type polyéthylène ou polyéthylène basse densité.

L'utilisation de profilés complémentaires 110, 210 bi-matière, c'est-à-dire réalisés dans des matériaux différents, présente notamment un avantage dans le cas des dispositifs de fermeture ayant des propriétés d'étanchéité. Les profilés complémentaires comprenant des altérations (profilés 110a-110c sur les figures 9h et 9i) peuvent en effet être réalisés dans un matériau rigide, afin d'améliorer les effets sonores et tactiles du dispositif, tandis que les profilés complémentaires intacts (profilés 110d-110e sur ces mêmes figures) peuvent être réalisés dans un matériau plus souple, permettant ainsi de faciliter les engagements et séparations dans la direction longitudinale du dispositif de fermeture. L'utilisation d'un matériau plus souple présente en outre l'avantage d'améliorer les propriétés d'étanchéité des profilés complémentaires 110d-110e et donc du dispositif de fermeture, dans la mesure où ces profilés complémentaires ont une meilleure capacité de déformation qui permet de limiter les risques d'ouverture intempestive sous l'effet de la pression interne des sachets.

Les profilés complémentaires 110, 210 bi-matière peuvent être directement co-extrudés avec les voiles support 100, 200 (les profilés 110, 210 étant alors réalisés dans le même matériau que le tronçon du voile 100, 200 correspondant sur lequel ils sont fixés), ou obtenus séparément et fixés ensuite sur ceux-ci, de manière conventionnelle.

Néanmoins, selon les matériaux choisis pour les différents profilés complémentaires 110, 210, des problèmes de cohésion entre les matériaux constitutifs des profilés complémentaires 110, 210, et le cas échéant les voiles supports 100, 200, peuvent apparaître.

Dans ce cas, il est possible notamment de munir chaque profilé complémentaire d'une semelle 116 s'étendant selon la direction longitudinale des profilés 110, 210, et de fixer cette semelle 116 sur le voile correspondant 100, 200. La semelle 116 est de préférence formée intégralement avec la tige 112, 214 respective des profilés 110, 210, et peut s'étendre par exemple de part et d'autre de la tige 112, 214, sur une largeur au moins égale à la largeur de la protubérance évasée 114, 216 des profilés 112,214.

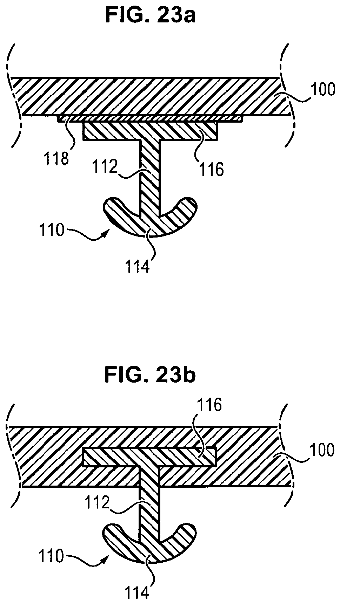

La semelle 116 peut être fixée à l'aide d'un liant 118 conventionnel, appliqué entre le voile correspondant 100, 200 et la semelle 116 sur toute sa longueur, comme illustré sur la figure 23a. En variante, la semelle 116 peut être noyée dans la matière du voile support 100, 200, comme illustré sur la figure 23b. On pourra notamment se référer à la demande française FR 2 884 119 pour plus de détails sur les profilés munis de semelles 116.

Le cas échéant, lorsque les voiles 100, 200 comprennent plusieurs profilés complémentaires 110, 210 réalisés dans des matériaux différents, chaque profilé complémentaire 110, 210 peut être muni de sa propre semelle 116. En variante, on peut réaliser une semelle unique par groupe de profilés complémentaires 110, 210 réalisés dans le même matériau. Ainsi, dans l'exemple de dispositif à cinq profilés 110, 210 décrit ci-dessus, les profilés complémentaires 110a-110c, 210a-210c réalisés en matériau rigide peuvent être formés intégralement avec une semelle commune ou être formés chacun intégralement avec une semelle qui leur est propre, puis fixés sur le voile 100, 200 complémentaire. Les profilés de fermeture 110d-100e quant à eux, qui sont réalisés en matériau plus souple, peuvent être venus de matière avec le voile complémentaire 100, 200 ou, en variante, être munis également d'une telle semelle et fixés sur le voile correspondant 100, 200, de manière similaire aux profilés 110a-110c, 210a-210c en matériau rigide.

L'homme de l'art comprendra que la réalisation des altérations des deux profilés complémentaires 110, 210, permet de renforcer la sensation tactile et l'effet sonore de cliquetis obtenus notamment lors de l'ouverture du dispositif, mais également lors de sa fermeture, en raison de la succession de points durs et de points faibles dans l'engagement et la séparation ainsi défini dans la direction longitudinale de la fermeture.

La présente invention permet en effet d'obtenir une altération importante séquentielle des deux profilés complémentaires 110, 210, tout en garantissant leur possibilité d'engagement et de séparation. En effet, dans le cas d'écrasements 120, 220, ceux-ci sont parfaitement complémentaires, puisqu'ils sont réalisés en position fermée des deux profilés 110, 120, tandis que dans le cas des incisions séquentielles 120', 220', les profilés 110, 120 ne sont pas déformés selon leur largeur de sorte qu'ils restent complémentaires malgré un éventuel décalage des incisions 120', 220' entre les profilés complémentaires 110, 120.

On notera que la présence de tronçons 130, 230 de section constante et donc l'engagement aisé de ces tronçons entre deux altérations 300 permet par simple coulissement entre les doigts d'un utilisateur de prolonger l'engagement obtenu au niveau de tels tronçons 130, 230 de section constante vers les zones d'altération 300 déformées.

Le renforcement de la sensation tactile et de l'effet sonore obtenu grâce à la présente invention résulte ainsi de l'élargissement commun réalisé sur les deux profilés.

A titre d'exemple non limitatif, le pas des altérations séquentiels réalisés est compris entre 4mm et 1cm.

Par ailleurs dans le cadre de la présente invention, les écrasements sont de préférence réalisés de sorte que l'on obtienne un élargissement dans le sens de la largeur L des profilés 110, 120, au moins égal à 5% de la largeur L d'origine, de préférence supérieure à 10% de cette largeur L.

Les mollettes d'écrasement et/ou d'incision400a-400d et le cas échéant le rouleau d'appui 420 peuvent être chauffés afin de renforcer l'altération des profilés 110, 210 de fermeture et garantir le maintien en position de ceux-ci.

Cependant, si le matériau le permet, les écrasements peuvent être réalisés à l'aide de simples mollettes 400a-400d à température ambiante.

Selon encore une autre variante, les altérations séquentielles peuvent être réalisées avec des mollettes 400a-400d à température ambiante, mais opérant sur une fermeture « ramollie », c'est-à-dire déformée par une extrusion à chaud en sortie de celle-ci.

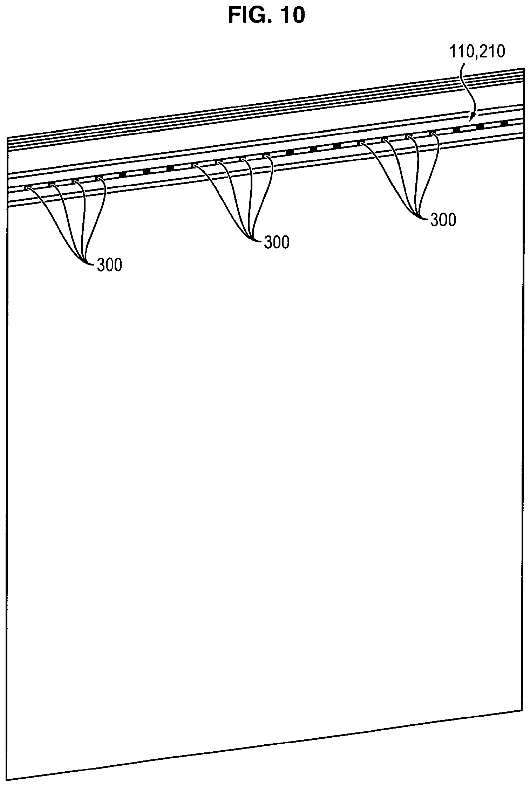

La figure 10 illustre un sachet conforme à la présente invention. On voit sur la figure 10 une série altérations réparties sur la longueur du dispositif de fermeture.

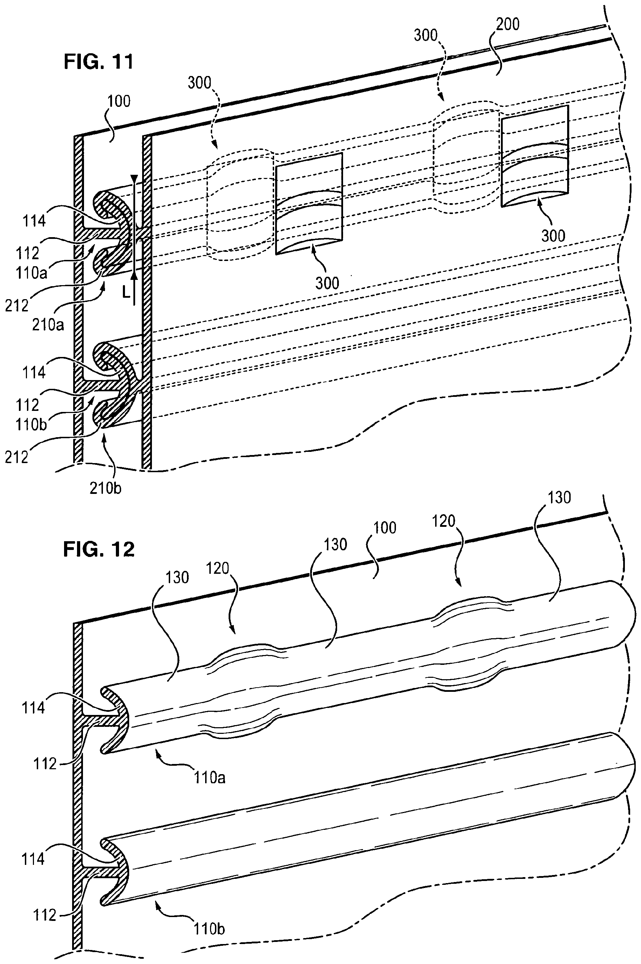

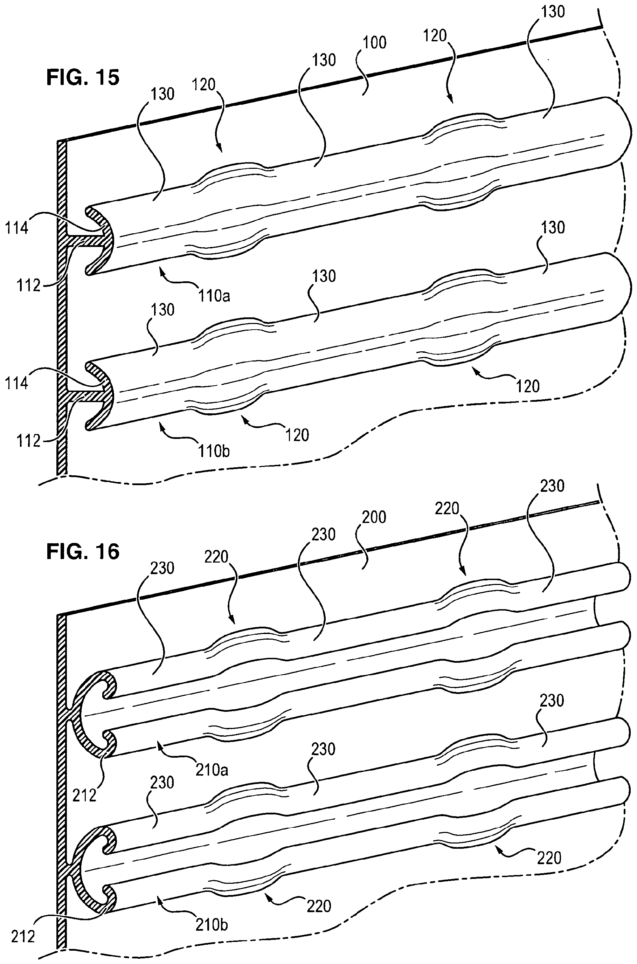

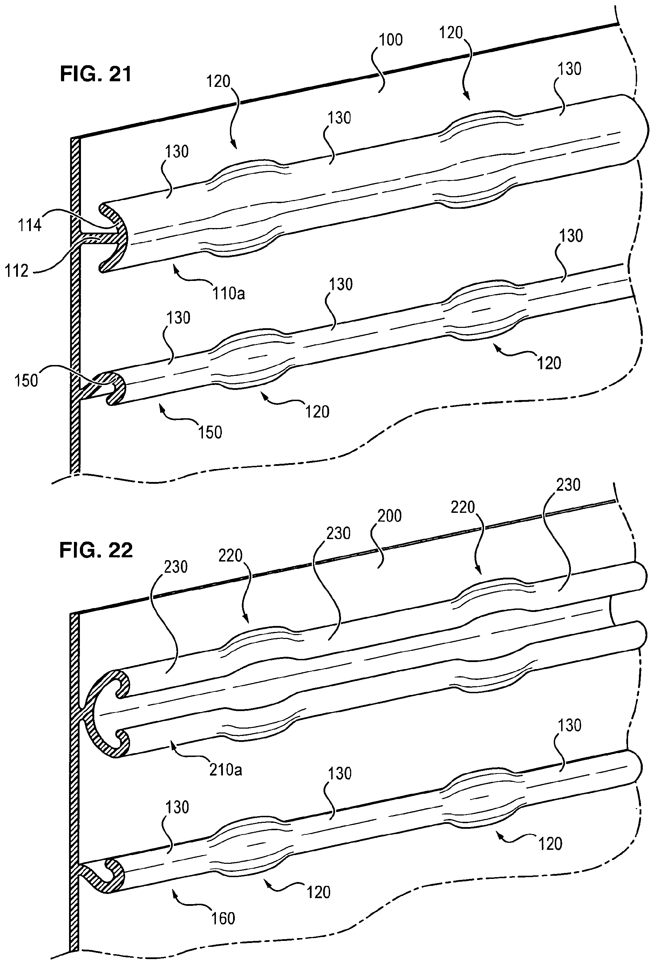

Bien entendu la présente invention n'est pas limitée aux modes de réalisation particuliers qui viennent d'être décrit. En particulier, les figures 11 à 22 illustrent des modes de réalisation dans lesquels les altérations 300 comprennent des écrasements séquentiels 120, 220, réalisés sur des dispositifs de fermeture comprenant deux profilés complémentaires 110a/210a et 110b/210b par voile 100, 200. Ceci n'est cependant pas limitatif, dans la mesure où l'homme du métier saura appliquer l'invention décrite sans difficulté pour des altérations séquentielles 300 comprenant des incisions 120', 220' combinées ou non avec des écrasements 120', 220 et/ou des profilés intacts, sur des voiles comprenant le cas échéant un plus grand nombre de profilés complémentaires 110, 210 et avec des types de profilés (mâle/mâle, crochets, etc.) différents.

Comme on l'a illustré sur les figures 11 à 22, selon des variantes de réalisation conformes à la présente invention, le dispositif de fermeture peut comprendre au moins deux paires de profilés complémentaires parallèles. Cette disposition permet de renforcer notamment l'étanchéité des sachets une fois fermée et de limiter les risques d'ouverture intempestive sous l'effet de la pression interne des sachets.

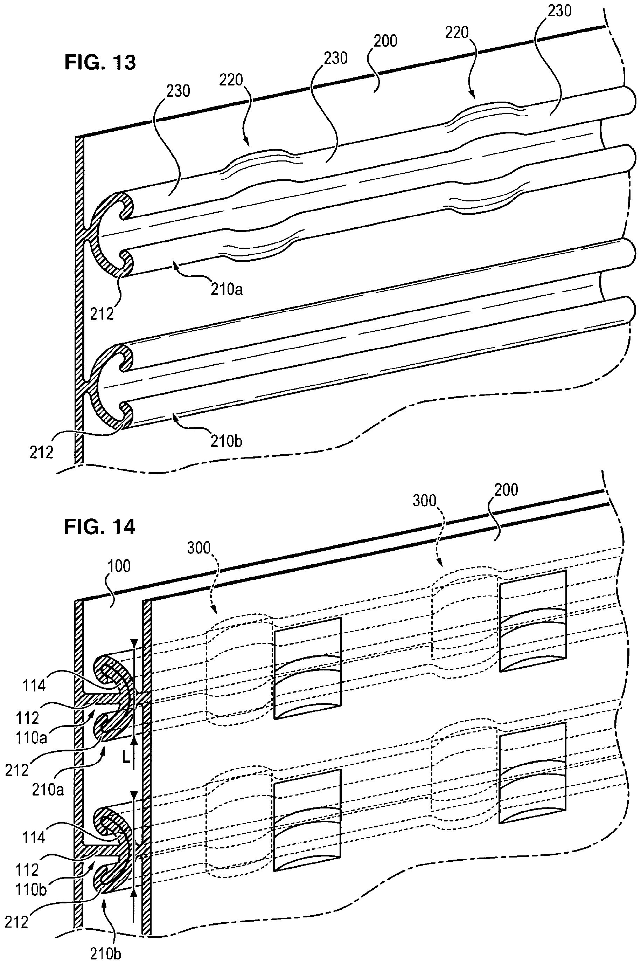

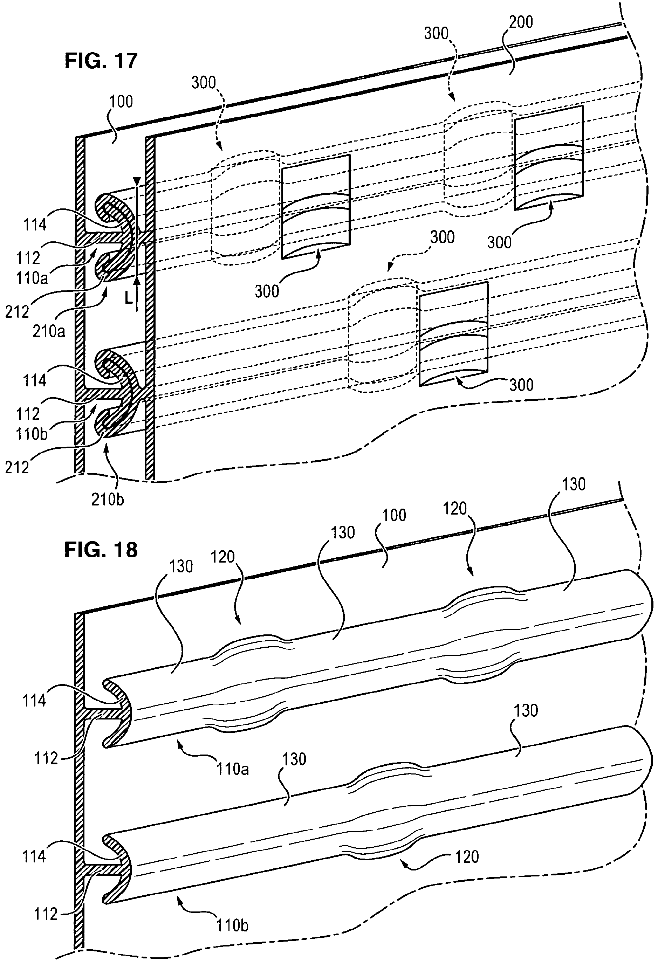

Dans ce cas l'on peut prévoir que les deux paires de profilés parallèles sont simultanément écrasés séquentiellement avec le même pas et en synchronisme comme illustré sur les figures 14 à 16, ou avec un décalage longitudinal comme illustré sur les figures 17 à 19 (ou encore avec des pas différents ou sous multiples d'une paire de profilés à l'autre et ce avec ou sans décalage longitudinal) ou que seulement une paire de profilés est écrasée comme illustrée sur les figures 11 à 13.

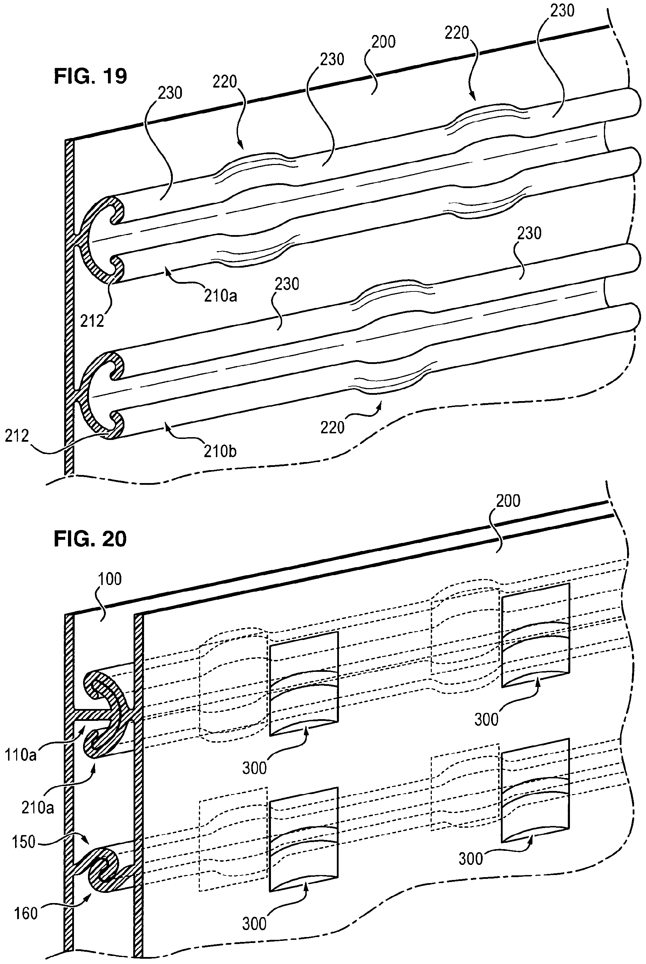

Comme on l'a illustré sur les figures 20 à 22 le cas échéant l'une au moins des paires de profilés peut être formée de profilés complémentaires en crochet 150, 160.

On a illustré sur les figures 11, 12 et 13 une première variante de réalisation d'un dispositif de fermeture conforme à la présente invention comprenant deux paires de profilés de fermeture complémentaires parallèles 110a/210a et 110b/210b. Plus précisément les figures 11, 12 et 13 représentent respectivement une vue en perspective partielle du dispositif de fermeture après altération séquentielle par écrasement d'une paire de profilés 110a/210a (la seconde paire de profilés 110b/210b n'est pas écrasée) et des vues individuelles de profilés mâles 110a et 110b et de profilés femelles 210a et 210b formant en combinaison un dispositif de fermeture conforme à la présente invention illustré sur la figure 11.

On a illustré sur les figures 14, 15 et 16 une deuxième variante de réalisation d'un dispositif de fermeture comprenant deux paires de profilés de fermeture complémentaires parallèles 110a/210a et 110b/210b. Plus précisément les figures 14, 15 et 16 représentent respectivement une vue en perspective partielle du dispositif de fermeture après altération séquentielle par écrasement des deux paires de profilés 110a/210a et 110b/210b et des vues individuelles de profilés mâles 110a et 110b et de profilés femelles 210a/210b formant en combinaison un dispositif de fermeture illustré sur la figure 14.

On a illustré sur les figures 17, 18 et 19 une troisième variante de réalisation d'un dispositif de fermeture comprenant deux paires de profilés de fermeture complémentaires parallèles 110a/210a et 110b/210b. Plus précisément les figures 17, 18 et 19 représentent respectivement une vue en perspective partielle du dispositif de fermeture après altération séquentielle par écrasement des deux paires de profilés 110a/210a et 110b/210b avec décalage longitudinal entre les écrasements réalisés sur les deux paires de profilés et des vues individuelles de profilés mâles 110a et 110b et de profilés femelles 210a et 210b formant en combinaison un dispositif de fermeture illustré sur la figure 17.

On a illustré sur les figures 20, 21 et 22 une quatrième variante de réalisation d'un dispositif de fermeture comprenant deux paires de profilés de fermeture complémentaires parallèles l'un de type mâle/femelle complémentaires 110/210 et l'autre de type crochets complémentaires 150/160. Plus précisément les figures 20, 21 et 22 représentent respectivement, une vue en perspective partielle du dispositif de fermeture après altération séquentielle par écrasement et des vues individuelles des profilés portés par des films support opposés et formant en combinaison un dispositif de fermeture illustré sur la figure 20.

## Revendications

1. Dispositif de fermeture pour sachets ou équivalents comprenant une série de profilés complémentaires parallèles (110a-110e, 210a-210e) portés par des voiles support respectifs (100, 200), dans lequel chaque voile support comprend au moins deux profilés complémentaires (110a-110e, 210a-210e) formant une fermeture multiple, dont
- des profilés complémentaires (110a-110c, 210a-210c) comprenant des écrasements séquentiels (120, 220) en prise selon une direction perpendiculaire aux voiles support de sorte que les écrasements séquentiels (120, 220) réalisent un évasement des deux profilés complémentaires (110, 210) dans le sens de la largeur transversale à la direction d'élongation du dispositif de fermeture, et
- des profilés complémentaires comprenant des incisions séquentielles sans enlèvement de matière (120', 220') selon une direction perpendiculaire aux voiles support et/ou dépourvus d'altérations séquentielles (110d-110e, 210d-210e).

2. Dispositif selon la revendication 1, comprenant au moins trois profilés complémentaires formant une fermeture multiple, dont
- des profilés complémentaires comprenant des écrasements séquentiels (120, 220) en prise selon une direction perpendiculaire aux voiles support de sorte que les écrasements séquentiels (120, 220) réalisent un évasement des deux profilés complémentaires (110, 210) dans le sens de la largeur transversale à la direction d'élongation du dispositif de fermeture, et
- des profilés complémentaires dépourvus d'altérations séquentielles (110d-110e, 210d-210e).

3. Dispositif selon la revendication 1, comprenant au moins cinq profilés complémentaires (110a-110e, 210a-210e), dont au moins trois profilés complémentaires (110a-110c, 210a-210c) comprenant des écrasements séquentiels (120, 220) et au moins un profilé complémentaire (110d-110e, 210d-210e) comprenant des incisions séquentielles (120', 220').

4. Dispositif selon la revendication 1, comprenant au moins cinq profilés complémentaires (110a-110e, 210a-210e), dont au moins trois profilés complémentaires comprenant des écrasements séquentiels (110a-110c, 210a-210c) et au moins un profilé complémentaire dépourvu d'altérations séquentielles (110d-110e, 210d-210e).

5. Dispositif selon l'une des revendications 1 à 4, dans lequel les profilés complémentaires (110a-110e, 210a-210e) comprennent des profilés de type mâle/mâle.

6. Dispositif selon l'une des revendications 1 à 5, dans lequel au moins une partie des profilés complémentaires (110a-110c, 210a-210c) est réalisée dans un premier matériau, et au moins une autre partie des profilés complémentaires (110d-110e, 210d-210e) est réalisée dans un deuxième matériau, différent du premier matériau.

7. Dispositif selon la revendication 6, dans lequel le premier matériau comprend du polypropylène ou du polyéthylène haute densité, et le deuxième matériau comprend du polyéthylène ou du polyéthylène basse densité.

8. Dispositif selon l'une des revendications 6 ou 7, dans lequel les profilés complémentaires (110a-110c, 210a-210c) comprenant des écrasements séquentiels sont réalisés dans le premier matériau.

9. Dispositif selon l'une des revendications 6 à 8, dans lequel les profilés complémentaires (110d-110e, 210d-210e) dépourvus d'altérations séquentielles (300) sont réalisés dans le deuxième matériau.

10. Dispositif selon l'une des revendications 6 à 9, dans lequel les profilés complémentaires (110a-110c, 210a-210c) réalisés dans le premier matériau et/ou les profilés complémentaires (110d-110e, 210d-210e) réalisés dans le deuxième matériau sont formés intégralement avec une semelle (116), fixée sur le voile correspondant (100, 200).

11. Dispositif selon la revendication 10, dans lequel la semelle (116) est fixée sur le voile correspondant (100, 200) par l'intermédiaire d'un liant (118).

12. Dispositif selon la revendication 10, dans lequel la semelle (116) est noyée dans le voile correspondant (100, 200) de sorte que ladite semelle (116) est fixée sur ledit voile (100, 200).

13. Dispositif selon l'une des revendications 1 à 10, **caractérisé par le fait que** le pas des écrasements séquentiels (300) est compris entre 4mm et 1cm.

14. Sachet **caractérisé par le fait qu'**il comprend un dispositif de fermeture conforme à l'une des revendications 1 à 13.

## Patentansprüche

1. Verschlussvorrichtung für Beutel und dergleichen, die mehrere parallele komplementäre Profile (110a-110e, 210a-210e) umfasst, die von jeweiligen Tragstegen (100, 200) getragen werden, wobei jeder Tragsteg mindestens zwei komplementäre Profile (110a-110e, 210a-210e) umfasst, die einen Mehrfachverschluss bilden, davon
- komplementäre Profile (110a-110c, 210a-210c) sequenziellen Quetschungen (120, 220) im Eingriff in einer senkrechten Richtung zu den Tragstegen umfassen, so dass die sequenziellen Quetschungen (120, 220) eine Aufweitung der beiden komplementären Profile (110, 210) in Richtung der Breite quer zur Streckung der Verschlussvorrichtung durchführen, und
- komplementäre Profile sequenziellen Einschnitten ohne Entfernen von Material (120', 220') in einer Richtung senkrecht zu den Tragstegen umfassen und/oder ohne sequenzielle Änderungen (110d-110e, 210d, 210e).

2. Vorrichtung nach Anspruch 1, die mindestens drei komplementäre Profile umfasst, die einen Mehrfachverschluss bilden, davon
- komplementäre Profile, die sequenzielle Quetschungen (120, 220) im Eingriff in einer senkrechten Richtung zu den Tragstegen umfassen, so dass die sequenziellen Quetschungen (120, 220) eine Aufweitung der beiden komplementären Profile (110, 210) in Richtung der Breite quer zur Streckung der Verschlussvorrichtung durchführen, und
- komplementäre Profile ohne sequenzielle Änderungen (110d-110e, 210d-210e).

3. Vorrichtung nach Anspruch 1, die mindestens fünf komplementäre Profile umfasst (110a-110e, 210a-210e), davon mindestens drei komplementäre Profile (110a-110c, 210a-210c) sequenzielle Quetschungen (120, 220) umfassen und mindestens ein ergänzendes Profil (110d-110e, 210d-210e), das sequenzielle Einschnitte (120', 220') umfasst.

4. Vorrichtung nach Anspruch 1, die mindestens fünf komplementäre Profile umfasst (110a-110e, 210a-210e), davon mindestens drei komplementäre Profile sequenziellen Quetschungen (110a-110c, 210a-210c) umfassen und mindestens ein ergänzendes Profil ohne sequenzielle Änderungen (110d-110e, 210d-210e).

5. Vorrichtung nach einem der Ansprüche 1 bis 4, wobei die komplementären Profile (110a-110e, 210a-210e) Steckprofile umfassen.

6. Vorrichtung nach einem der Ansprüche 1 bis 5, wobei mindestens ein Teil der komplementären Profile (110a-110c, 210a-210c) aus einem ersten Material ausgeführt ist, und mindestens ein anderer Teil der komplementären Profile (110d-110e, 210d-210e) aus einem zweiten Material ausgeführt ist, das sich vom ersten unterscheidet.

7. Vorrichtung nach Anspruch 6, wobei das erste Material Polypropylen oder Polyethylen hoher Dichte enthält, und das zweite Material Polyethylen oder Polyethylen geringer Dichte enthält.

8. Vorrichtung nach einem der Ansprüche 6 oder 7, wobei die komplementären Profile (110a-110c, 210a-210c), die sequenzielle Quetschungen umfassen, aus dem ersten Material ausgeführt sind.

9. Vorrichtung nach einem der Ansprüche 6 bis 8, wobei die komplementären Profile (110d-110e, 210d-210e) ohne sequenzielle Änderungen (300) aus dem zweiten Material ausgeführt sind.

10. Vorrichtung nach einem der Ansprüche 6 bis 9, wobei die komplementären Profile (110a-110c, 210a-210c), die aus dem ersten Material ausgeführt sind, und/oder die komplementären Profile (110d-110e, 210d-210e), die aus dem zweiten Material ausgeführt sind, vollständig mit einer Sohle (116) ausgebildet sind, die auf dem entsprechenden Steg (100, 200) befestigt ist.

11. Vorrichtung nach Anspruch 10, wobei die Sohle (116) mit einem Bindemittel (118) auf dem entsprechenden Steg (100, 200) befestigt ist.

12. Vorrichtung nach Anspruch 10, wobei die Sohle (116) im entsprechenden Steg (100, 200) eingebettet ist, so dass die Sohle (116) auf dem Steg (100, 200) befestigt ist.

13. Vorrichtung nach einem der Ansprüche 1 bis 10, **dadurch gekennzeichnet, dass** die Teilung der sequenziellen Quetschungen (300) zwischen 4 mm und 1 cm beträgt.

14. Beutel, **dadurch gekennzeichnet, dass** er eine Verschlussvorrichtung nach einem der Ansprüche 1 bis 13 umfasst.

## Claims

1. A closure device for bags or the like, comprising a series of parallel complementary profiles (110a-110e, 210a-210e) borne by respective support webs (100, 200), wherein each support web comprises at least two complementary profiles (110a-110e, 210a-210e) forming a multiple closure, whereof
- complementary profiles (110a-110e, 210a-210e) comprising sequential crushings (120, 220) engaged in a direction perpendicular to the support webs such that the sequential crushings (120, 220) flare both complementary profiles (110, 210) in the direction of the width transversal to the elongation direction of the closure device, and
- complementary profiles comprising sequential incisions without removal of material (120', 220') in a direction perpendicular to the support webs and/or devoid of sequential alterations (110d-110e, 210d-210e).

2. The device according to claim 1, comprising at least three complementary profiles forming a multiple closure, whereof
- complementary profiles comprising sequential crushings (120, 220) engaged in a direction perpendicular to the support webs such that the sequential crushings (120, 220) flare both complementary profiles (110, 210) in the direction of the width transversal to the elongation direction of the closure device, and
- complementary profiles devoid of sequential alterations (110d-110e, 210d-210e).

3. The device according to claim 1, comprising at least five complementary profiles (110a-110e, 210a-210e), whereof at least three complementary profiles (110a-110c, 210a-210c) comprising sequential crushings (120, 220) and at least one complementary profile (110d-110e, 210d-210e) comprising sequential incisions (120', 220').

4. The device according to claim 1, comprising at least five complementary profiles (110a-110e, 210a-210e), whereof at least three complementary profiles comprising sequential alterations (110a-110c, 210a-210c) and at least one complementary profile devoid of sequential alterations (110d-110e, 210d-210e).

5. The device according to one of claims 1 to 4, wherein the complementary profiles (110a-110e, 210a-210e) comprise profiles of male/male type.

6. The device according to one of claims 1 to 5, wherein at least one part of the complementary profiles (110a-110c, 210a-210c) is made of a first material, and at least one other part of the complementary profiles (110d-110e, 210d-210e) is made of a second material, different from the first material.

7. The device according to claim 6, wherein the first material comprises polypropylene or high-density polyethylene, and the second material comprises polyethylene or low-density polyethylene.

8. The device according to one of claims 6 or 7, wherein the complementary profiles (110a-110c, 210a-210c) comprising sequential alterations are made of the first material.

9. The device according to one of claims 6 to 8, wherein the complementary profiles (110d-110e, 210d-210e) devoid of sequential alterations (300) are made of the second material.

10. The device according to one of claims 6 to 9, wherein the complementary profiles (110a-110c, 210a-210c) made of the first material and/or the complementary profiles (110d-110e, 210d-210e) made of the second material are formed integrally with a sole (116), attached to the corresponding web (100, 200).

11. The device according to claim 10, wherein the tread (116) is attached to the corresponding web (100, 200) by means of a binder (118).

12. The device according to claim 10, wherein the sole (116) is embedded in the corresponding web (100, 200) such that said sole (116) is attached to said web (100, 200).

13. The device according to one of claims 1 to 10, **characterized in that** the pitch of the sequential crushings (300) is comprised between 4 mm and 1 cm.

14. A bag **characterized in that** it comprises a closure device according to one of claims 1 to 13.
